# EUROPÄISCHE PATENTSCHRIFT

(11) **EP 1 648 678 B1**
(45) Veröffentlichungstag und Bekanntmachung des Hinweises auf die Patenterteilung: **13.05.2009**
(21) Anmeldenummer: 05716418.8
(22) Anmeldetag: 29.03.2005
(51) Int. Cl.: B29C 43/30, D06N 1/00

(54) **GEMUSTERTES LINOLEUMFLÄCHENGEBILDE UND VERFAHREN ZU SEINER HERSTELLUNG**
PATTERNED LINOLEUM SHEET AND METHOD FOR MANUFACTURING THE SAME
FEUILLE DE LINOLEUM A MOTIFS ET SON PROCÉDÉ DE PRODUCTION

(30) Priorität: 29.03.2004 DE 102004015257
(43) Veröffentlichungstag der Anmeldung: 26.04.2006
(73) Patentinhaber: Armstrong DLW AG, 74321 Bietigheim-Bissingen (DE)
(72) Erfinder: DOWIDAT-ESKES, Marco, 27749 Delmenhorst (DE); BURMEISTER, Guido, 27793 Wildeshausen (DE); NIENABER, Jörg, 27798 Hude (DE)
(74) Vertreter: Müller-Boré & Partner Patentanwälte
(86) Internationale Anmeldenummer: PCT/EP2005/003258
(87) Internationale Veröffentlichungsnummer: WO 2005/092590

(56) Entgegenhaltungen:
- EP-A- 0 528 059
- EP-A- 1 176 247
- DE-A1- 19 914 183
- DE-A1- 19 915 868
- DE-A1- 19 948 406
- DE-C1- 10 117 922
- US-A- 2 775 994
- US-A- 2 986 198
- US-A- 3 194 859
- FÖRSTER G.; EIFFLER J.; BUCHHOLZ U.: 'Linoleum, Der Bodenbelag aus nachwachsenden Rohstoffen', 1995, VERLAG MODERNE INDUSTRIE (DIE BIBLIOTHEK DER TECHNIK, BD. 107), LANDSBERG/LECH, ISBN 3-478-93123-1 * Seite 19, Absatz 5 - Seite 24, Absatz 2

## Beschreibung

Die vorliegende Erfindung betrifft ein gemustertes Linoleumflächengebilde mit einer neuartigen Oberflächendessinierung, Verfahren zu dessen Herstellung und dessen Verwendung als Bodenbelag, Fliese, Wandabdeckung oder Dekorbelag.

Linoleumbeläge werden seit vielen Jahren in unterschiedlichen Farben und Dessinierungen hergestellt. Zur Erzeugung einer Oberflächenmusterung eines Linoleumbelags ist ein Verfahren bekannt, bei dem gefärbte Polymerflakes bzw. -flocken homogen in die Linoleummischmasse zur Herstellung eines Linoleum-vorfells bzw. Linoleumflächengebildes eingearbeitet werden (siehe EP 1 176 247 A1 and DE 19915 868 C2). Ferner ist im Stand der Technik bekannt, farbige Linoleummischmassepartikel in die Oberflächenschicht eines Linoleumvorfells einzupressen und die durch Übereinanderlegen der Linoleumvorfelle erzeugten Fellpakete anschließend zu kalandrieren (siehe DE 19948 406 A1). Die Art der mit den vorstehenden Verfahren herstellbaren Oberflächendessinierungen unterliegt jedoch relativ starken Beschränkungen hinsichtlich der erzielbaren Musterung.

Somit liegt der vorliegenden Erfindung die Aufgabe zugrunde, ein Linoleumflächengebilde mit einer neuartigen Oberfilächendessinierung und ein Verfahren zu dessen Herstellung bereitzustellen.

Diese Aufgabe wird durch die in den unabhängigen Ansprüchen 1, 2, 11, 15 and 16 gekennzeichneten Ausführungsformen gelöst.

Insbesondere stellt die vorliegende Erfindung ein Verfahren zur Herstellung eines gemusterten Linoleumflächengebildes bereit, umfassend die Schritte:
(a) Aufbringen einer flächigen Schicht aus einem linoleumfremden Material auf mindestens einen Teil der Oberfläche eines Linoleumvorfells und/oder Einbringen eines linoleumfremden Materials in vorbestimmte Vertiefungen in dem Linoleumvorfell,
(b) Schneiden des erhaltenen Linoleumvortells in Stücke vorbestimmter Länge,
(c) Übereinanderlegen der geschnittenen Linoleumvorfellstücke zu einem schuppenförmigen Fellpaket und
(d) Auswalzen des schuppenförmigen Fellpakets zu einem gemusterten Linoleumflächengebilde.

Ein alternatives Verfahren zur Herstellung eines gemusterten Linoleumflächengebildes besteht darin,
(a') ein linoleumfremdes Material in Form einer Lösung, einer Paste, einer Suspension, eines Pulvers, eines Granulats oder einer Dispersion auf die gekratzte Linoleummischmasse aufzubringen (d.h. vor Auswalzen eines Linoleumvorfells) und die mit dem linoleumfremden Material versehene gekratzte Linoleummischmasse zu einem Linoleumvorfell auszuwalzen,
(b) das erhaltene Linoleumvorfell in Stücke vorbestimmter Länge zu schneiden,
(c) die geschnittenen Linoleumvorfellstücke zu einem schuppenförmigen Fellpaket übereinanderzulegen und
(d) das schuppenförmige Fellpaket zu einem gemusterten Linoleumflächengebilde auszuwalzen.

Im Anschluß an Schritt (a') kann, wie vorstehend beschrieben, auch eine flächige Schicht aus einem linoleumfremden Material auf mindestens einen Teil der Oberfläche dieses Linoleumvorfells aufgebracht und/oder ein linoleumfremdes Materials in vorbestimmte Vertiefungen in diesem Linoleumvorfell eingebracht werden, wobei die Weiterverarbeitung in analoger Weise, wie vorstehend und nachfolgend beschrieben, durchgeführt werden kann.

Ferner kann das linoleumfremde Material zusätzlich oder anstelle des Aufbringens auf die Oberfläche und/oder des Einbringens in die vorbestimmten Vertiefungen des Linoleumvortells auch ganz oder teilweise auf das Fellpaket aus Linoleumvorfellstücken vor dem Kalandrieren aufgebracht werden.

Unter einer gekratzten Linoleummischmasse versteht man gemäß der vorliegenden Erfindung eine Linoleummischmasse, d.h. eine möglichst homogen gemischte Masse aus den zur Linoleumherstellung üblicherweise verwendeten Rohstoffen, die in Form eines unregelmäßig geformten, meist grobkörnigen Materials vorliegt und beispielsweise auf einem Förderband ausgebreitet wird und einer Auswalzvorrichtung, wie einem Kalander, zugeführt wird. Das Aufbringen des linoleumfremden Materials auf die gekratzte Linoleummischmasse kann abhängig von der Beschaffenheit des aufzubringenden linoleumfremden Materials durch übliche auf dem Fachgebiet bekannte Verfahren erreicht werden, wobei das Aufsprühen einer Lösung oder einer Suspension, die das linoleumfremde Material enthält, bevorzugt ist.

Unter einem linoleumfremden Material versteht man gemäß der vorliegenden Erfindung ein festes (z.B. pulverförmiges), flüssiges, gelöstes oder suspensions- oder dispersionsartiges Material, das sich von den für die Herstellung der Linoleummischmasse verwendeten Rohstoffen, wie Bedfordzement (Bindemittel), Holzmehl, Korkmehl, Kreide, Füllstoffe, Sikkativ (Reifebeschleuniger) und gegebenenfalls übliche Verarbeitungshilfsstoffe, unterscheidet. Das linoleumfremde Material unterliegt grundsätzlich keinen besonderen Beschränkungen. Es kann beispielsweise in Form eines Pulvers, eines Granulats, einer Paste, einer Suspension und/oder einer Lösung verwendet werden. Das linoleumfremde Material unterscheidet sich vorzugsweise von den in der Linoleummischmasse verwendeten Materialien, wie beispielsweise den darin gegebenenfalls verwendeten Pigmenten.

Nach einer alternativen Ausführungsform kann das linoleumfremde Material auch in Form einer mindestens teilweisen Beschichtung eines teilchenförmigen Materials vorliegen, welches aus einem vorzugsweise mit Linoleum verträglichen Polymer hergestellt ist. Vorzugsweise liegt das teilchenförmige Material in Form eines Granulats vor.

Vorzugsweise ist das linoleumfremde Material ein metallisches Material und/oder ein Pigment, das sich von dem/den gegebenenfalls zur Färbung der Linoleummischmasse verwendeten Pigment(en) unterscheidet. Zumindest unterscheidet sich bei Verwendung eines Pigments als linoleumfremdes Material dessen Farbe von der eines für die Einfärbung der Linoleummischmasse verwendeten Pigments. Unter dem Ausdruck "metallisches Material" und/oder "Pigment" ist im Sinne der vorliegenden Erfindung sowohl ein Metall und/oder ein Pigment selbst, aber auch metall- und/oder pigmenthaltige Materialien, wie beispielsweise Pasten, Lösungen oder Suspensionen, zu verstehen.

Geeignete metallische Materialien sind Metallpulver oder Metallpasten, wie Aluminiumpulver, Aluminiumpulver in wässrigen Suspensionen oder Dispersionen, Aluminiumpulver in wässrigen oder lösungsmittelhaltigen Lacken oder UV härtenden Lacken.

Geeignete Pigmente sind anorganische oder organische Farbpigmente, die sich von den für die Einfärbung der Linoleummischmasse gegebenenfalls verwendeten Farbpigmenten mindestens in ihrem Farbton bzw. ihrer Farbtiefe unterscheiden.

Die verwendbaren anorganischen Farbpigmente unterliegen keinen besonderen Beschränkungen. Im allgemeinen versteht man unter anorganischen Farbpigmenten Pigmente auf Basis von Oxiden und Oxidhydroxiden oder Sulfiden und Sulfoseleniden, Chromatpigmente und chromhaltige Pigmente, Ultramarinpigmente und Eisenblaupigmente (vgl. Ullmanns Encyklopädie der technischen Chemie, 4. Auflage, Band 18, Seiten 599 bis 645).

Auch die geeigneten organischen Farbpigmente unterliegen grundsätzlich keinen besonderen Beschränkungen. Organische Farbpigmente sind beispielsweise Azopigmente, Metallkomplexpigmente, Isoindolinpigmente, Phthalocyaninpigmente, Chinacridinpigmente, Perinonpigmente, Perylenpigmente, Anthrachinonpigmente, Thioindigopigmente, Dioxazinpigmente, Triphenylmethanpigmente, Chinophthalonpigmente oder Fluoreszenzpigmente (vgl. Ullmanns Encyklopädie der technischen Chemie, 4. Auflage, Band 18, Seiten 661 bis 695).

Eine bevorzugte Gruppe von Pigmenten, die in der vorliegenden Erfindung verwendbar ist, sind Effektpigmente oder Glanzpigmente (vgl. beispielsweise Ullmanns Encyklopädie der technischen Chemie, 4. Auflage, Band 18, Seiten 629 bis 634). Unter einem Effektpigment wird im allgemeinen ein Farbpigment verstanden, das bei Betrachten aus unterschiedlichen Blickwinkeln einen unterschiedlichen Farbeindruck hervorruft. Ferner werden gemäß der vorliegenden Erfindung unter Effektpigmenten fluoreszierende oder phosphoreszierende Pigmente verstanden. Bevorzugte Effektpigmente sind beispielsweise Effektpigmente wie Glimmer bzw. Glimmermineralien oder Polyester-Glimmer.

Beispiele für Glanzpigmente sind Metalleffektpigmente, wie Aluminiumpigmente oder Kupfer- und Goldbronzepigmente, oder Perlglanzeffektpigmente.

Besonders bevorzugt werden als linoleumfremdes Material ein Aluminiumpulver, eine Aluminiumpaste oder ein Effektpigment auf Basis von Glimmer oder Glimmermineralien oder von Polyester-Glimmer, gegebenentalls mit Trägermaterial auf Cellulosebasis.

Das Aufbringen des linoleumfremden Materials auf das Linoleumvorfell erfolgt abhängig von dessen Beschaffenheit bzw. Aggregatzustand durch übliche Aufbringtechniken, wie Rakeln, Aufbürsten, Aufsprühen, etc. Mit geeigneten Aufbringtechniken ist ein Fachmann wohl vertraut und er wählt die jeweils geeignete Aufbringtechnik abhängig von der Beschaffenheit des linoleumfremden Materials entsprechend aus.

Unter einer flächigen Schicht versteht man gemäß der vorliegenden Erfindung eine die Oberfläche des Linoleumvorfells im wesentlichen gleichmäßig bzw. kontinuierlich bedeckende Schicht aus einem Pulver, einem Granulat, einer Paste, einer Suspension und/oder einer Lösung, welches bzw. welche das linoleumfremde Material enthält. Die flächige Schicht aus einem linoleumfremden Material wird vorzugsweise auf die Seite des Linoleumvorfells aufgebracht, welche beim resultierenden Linoleumflächengebilde die dem Betrachter zugewandte Seite bildet, beispielsweise die Nutzschicht im Falle eines Linoleumbodenbelags oder einer Linoleumfliese oder die Musterschicht einer Wandabdeckung oder eines Dekorbelags auf Linoleumbasis. Die flächige Schicht ist derart ausgebildet, daß sie beim Betrachten mit bloßem Auge eine durchgehende und im wesentlichen vollständig abdeckende Schicht bildet, so daß die Oberfläche des Linoleumvorfells bzw. der beschichtete Teil davon vorzugsweise nicht mehr durchscheint. Die flächige Schicht wird gemäß der vorliegenden Erfindung vorzugsweise nicht derart aufgebracht, daß weite Bereiche der Oberfläche des Linoleumvorfells unbedeckt bleiben.

Das linoleumfremde Material wird vorzugsweise als flächige Schicht auf die Oberfläche des Linoleumvorfells und/oder in vorbestimmte Vertiefungen in dem Linoleumvorfell aufgebracht bzw. eingebracht. Dabei kann die flächige Beschichtung über die gesamte Breite oder nur einen Teil der Breite des Linoleumvorfells aufgebracht werden. Entsprechendes gilt für die vorgenannten Vertiefungen, in welche das linoleumfremde Material eingebracht wird, d.h. diese Vertiefungen können über die gesamte Breite des Linoleumvortells oder nur einen Teil davon in regelmäßigen oder unregelmäßigen, vorbestimmten Abständen angeordnet sein.

Die Dicke der auf das Linoleumvorfell aufgebrachten flächigen Schicht sollte in einem Bereich von 5 µm bis 1000 µm liegen. Vorzugsweise liegt die Dicke der flächigen Schicht in einem Bereich von 10 µm bis 200 µm, besonders bevorzugt von 30 µm bis 100 µm und am meisten bevorzugt von 30 µm bis 80 µm.

Die gegebenenfalls in dem Linoleumvorfell vorgesehenen Vertiefungen unterliegen hinsichtlich der Form im allgemeinen keinen besonderen Beschränkungen. Sie können beispielsweise die Form von Rillen, vorbestimmten Mustern oder Verzierungen aufweisen. Die Vertiefungen in dem Linoleumvorfell können eine Tiefe in einem Bereich von 5% bis 60%, bezogen auf die Dicke des Linoleumvorfells aufweisen, wobei eine Tiefe von 10% bis 30% bevorzugt ist.

Vorzugsweise weisen die Vertiefungen eine durchgehende oder unterbrochene geradlinige oder mäandernde Rillen- bzw. Bandform oder eine Punktform auf, die beispielsweise durch Kratzen oder Prägen oder Punktieren des Linoleumvorfells gebildet werden kann. Die vorbestimmten Vertiefungen werden vorzugsweise vollständig mit dem linoleumfremden Material derart gefüllt, daß eine flächenbündige, d.h. planare Oberfläche ohne Erhebungen und Vertiefungen gebildet wird. Sofern Rillen vorhanden sind, beträgt der Rillenabstand, je nach gewünschter Dessinierung zwischen etwa 0,1 mm bis etwa 10 cm, vorzugsweise zwischen 0,2 mm und 2 cm. Die Breite der Rillen beträgt etwa 0,2 mm bis etwa 1 cm, vorzugsweise etwa 0,3 mm bis etwa 2 mm.

Die Vertiefungen werden in die Oberflächenseite des Linoleumvorfells eingebracht, die nach Ablegen durch beispielsweise einen Fellleger zur Oberseite des Fellpakets zeigt und nach Auswalzen des Fellpakets die Nutzschicht oder Musterschicht bildet.

Alternativ zu Schritt (a) bzw. Schritt (a') in den vorstehend beschriebenen erfindungsgemäßen Verfahren können auch ein- oder mehrfarbige Linoleummischmassepartikel oder Polymerpartikel, die mit einem linoleumfremden Material zumindest teilweise beschichtet sind, beispielsweise in Form eines Granulats auf mindestens eine Seite eines ein- oder mehrfarbigen Linoleumvorfells (wie in DE 199 15 868 C2 beschrieben) aufgestreut werden und im wesentliche verzugsfrei in das Linoleumvorfell eingepreßt werden.

Eine weitere Alternative zur Herstellung des erfindungsgemäßen gemusterten Linoleumflächengebildes wird nachfolgend beschrieben.

Zuerst wird in üblicher Weise ein gegebenenfalls ein- oder mehrfarbig eingefärbtes Linoleumvorfell beispielsweise mittels eines Kalanders ausgewalzt. Anschließend wird das Linoleumvorfell in Kalandrierungsrichtung bzw. Transportrichtung gesehen mindestens teilweise flächig mit dem linoleumfremden Material, vorzugsweise in Form einer Lösung, einer Paste, einer Suspension oder einer Dispersion, in üblicher Weise, vorzugsweise durch Aufrakeln beschichtet. Das derart beschichtete Linoleumvorfell kann direkt zu Granulat oder Chips verarbeitet werden oder es wird in Kalandrierrichtung entweder in vorzugsweise gleich große Hälften geschnitten oder ein- oder mehrfach gefaltet und anschließend werden die übereinandergelegten Abschnitte des Linoleumvorfells bzw. das gefaltete Linoleumvorfell zu Granulat oder Chips verarbeitet. Auf diese Weise werden besonders eingefärbte Granulatteilchen oder Chips erhalten, die sowohl die Farbgebung des entsprechenden, in dünner Schicht aufgebrachten linoleumfremden Materials als auch die Farbe bzw. Farben der verwendeten Linoleummischmasse aufweisen. Diese Granulatteilchen oder Chips werden anschließend z.B. mit einem Kalander zu einem Linoleumfell ausgewalzt, das in üblicher Weise weiterverarbeitet werden kann. Alternativ kann das linoleumfremde Material bei der vorstehend beschriebenen Verfahrensweise bereits vor dem ersten Kalandrieren auf die gekratzte Linoleummischmasse aufgebracht werden, wobei in diesem Fall das Aufsprühen einer Lösung bzw. Aufstreuen eines Pulvers des linoleumfremden Materials bevorzugt ist. Es kann jedoch auch in Form einer Paste, einer Suspension oder einer Dispersion aufgebracht werden. Anschließend kann das erhaltene Linoleumvorfell mit oder auch ohne weiteres Aufbringen einer mindestens teilweise aufgebrachten flächigen Schicht, wie vorstehend beschrieben, zu einem Granulat oder zu Chips verarbeitet und zu einem Linoleumfell ausgewalzt werden. Anschließend kann, wie vorstehend beschrieben, auf dieses ausgewalzte Linoleumfell zusätzlich eine flächige Schicht aus einem linoleumfremden Material, welches gleich oder verschieden zu dem vorher verwendeten linoleumfremden Material sein kann, auf mindestens einen Teil der Oberfläche dieses Linoleumvorfells und/oder in vorbestimmte Vertiefungen in diesem Linoleumvorfell aufgebracht bzw. eingebracht werden, wobei die Weiterverarbeitung in analoger Weise, wie vorstehend beschrieben, durchgeführt werden kann.

Demgemäß umfaßt ein Verfahren zur Herstellung eines gemusterten Linoleumfiächengebildes der vorstehend beschriebenen Art die folgenden Schritte:
- Herstellen eines ein- oder mehrfarbigen Linoleumvorfells aus Linoleummischmasse,
- Beschichten des ein- oder mehrfarbigen Linoleumvorfells auf mindestens einem Teil seiner Oberfläche mit einem linoleumfremden Material,
- Verarbeiten des beschichteten Linoleumvorfells zu Granulat oder Chips entweder direkt oder nachdem es in Kalandrierrichtung entweder in vorzugsweise gleich große Hälften geschnitten und anschließend die Abschnitte übereinandergelegt wurden oder das Linoleumvorfell ein- oder mehrfach gefaltet wurde,
- Herstellen eines Linoleumfells aus den erhaltenen Granulatteilchen oder Chips durch Auswalzen derselben und gegebenenfalls
- Weiterverarbeiten des erhaltenen Linoleumfells in üblicher oder in der vorgeschriebenen, erfindungsgemäßen Weise zu einem endgültigen Linoleumflächengebilde.

In einer weiteren Ausführungsform dieses Verfahrens wird ein linoleumfremdes Material in Form einer Lösung, einer Paste, einer Suspension oder einer Dispersion bereits auf die gekratzte Linoleummischmasse aufgebracht (d.h. vor Auswalzen eines Linoleumvorfells) und die mit dem linoleumfremden Material versehene gekratzte Linoleummischmasse zu einem Linoleumvorfell ausgewalzt. Das derart beschichtete Linoleumvorfell kann direkt zu Granulat oder Chips verarbeitet werden oder es wird in Kalandrierrichtung entweder in vorzugsweise gleich große Hälften geschnitten oder
ein- oder mehrfach gefaltet und anschließend werden die übereinandergelegten Abschnitte des Linoleumvorfells bzw. das gefaltete Linoleumvorfell zu Granulat oder Chips verarbeitet. Aus den erhaltenen Granulatteilchen oder Chips wird durch Auswalzen derselben ein Linoleumfell hergestellt und das erhaltene Linoleumfell gegebenenfalls in üblicher Weise zu einem endgültigen Linoleumflächengebilde weiterverarbeitet.

Im Anschluß an den Schritt des Aufbringens eines linoleumfremden Materials in Form einer Lösung, einer Paste, einer Suspension oder einer Dispersion auf die gekratzte Linoleummischmasse und des Auswalzens der mit dem linoleumfremden Material versehenen gekratzten Linoleummischmasse zu einem Linoleumvorfell kann, wie vorstehend beschrieben, das ein- oder mehrfarbige Linoleumvorfell zusätzlich auf mindestens einem Teil seiner Oberfläche mit einem linoleumfremden Material beschichtet werden, wobei die Weiterverarbeitung in analoger Weise, wie vorstehend beschrieben, durchgeführt werden kann.

Unter einem Linoleumvorfell versteht man gemäß der vorliegenden Anmeldung ein ein- oder mehrfarbiges kalandriertes Fell aus üblichen für die Linoleumherstellung verwendeten Rohstoffen, wie Bedfordzement (d.h. ein Gemisch aus teiloxidiertem Leinöl und Naturharz, wie Kolophonium), Holzmehl, Korkmehl, Kreide, Füllstoffe, wie Titandioxid, Pigmente, Graphit, Sikkativ (Reifebeschleuniger) und gegebenenfalls übliche Verfahrenshilfsstoffe. Das Linoleumvorfell kann in bekannter Weise mit einer unifarbenen, jaspierten oder gepunkteten Oberflächenmusterung (beispielsweise nach dem in DE 199 15 868 C2 beanspruchten Verfahren) hergestellt werden.

Gemäß einer bevorzugten Ausführungsform kann ein linoleumfremdes Material vorzugsweise in Form eines Pulvers, gebunden in einem polymeren Bindemittel, vorliegen. Geeignete polymere Bindemittel sind einem Fachmann bekannt, es ist jedoch bevorzugt, ein Heißschmelzmaterial (insbesondere auf Polyamidbasis) oder andere schmelzbare thermoplastische Polymere bzw. Copolymere, wie PET, PP, PE oder EVA, oder Polymere aus nachwachsenden Rohstoffen, wie Polymilchsäure, thermoplastische Stärke oder andere Kohlenhydrate, zu verwenden.

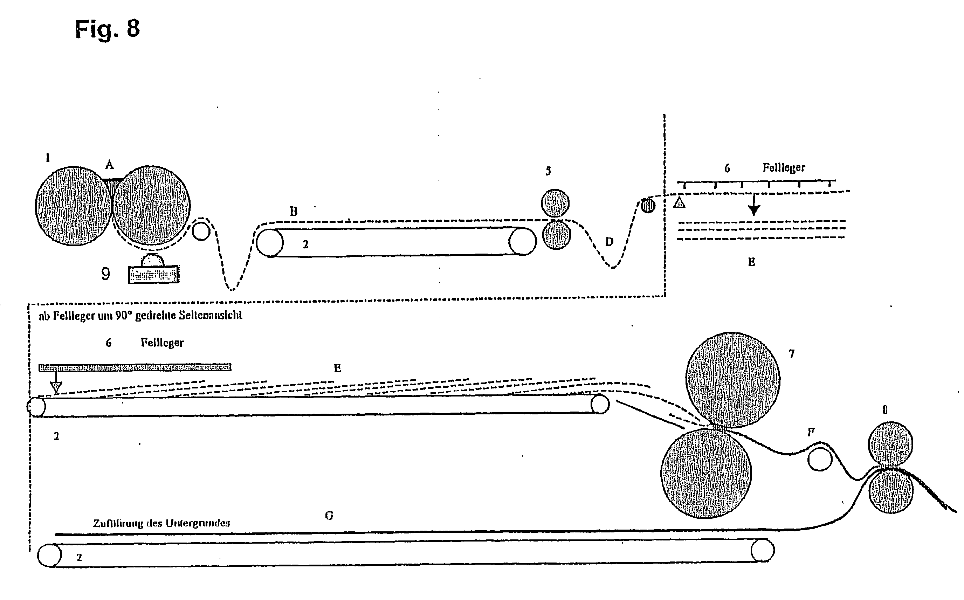

Das linoleumfremde Material, welches ein polymeres Bindemittel enthält, vorzugsweise ein Heißsclimelzmaterial, wird auf das Linoleumvorfell aufgebracht. Das Aufbringen erfolgt insbesondere durch einen Hotmeltcoater, der sich - wie in Figur 8 gezeigt - vorzugsweise unterhalb der kalten Walze des Fellkalanders befindet. Es können auch andere übliche Applikationstechniken, wie Aufsprühen, Aufrakeln, etc., angewendet werden.

Ferner ist es möglich, das Linoleumvorfell an allen in der vorliegenden Anmeldung angegebenen Aufbringungsorten mit dem Heißschmelzmaterial zu beschichten. Es ist sowohl möglich, die gesamte Breite des Linoleumvorfells zu beschichten, als auch nur einen Teil davon.

Die Temperatur der Heißschmelze ist abhängig von der Art des verwendeten Polymers oder der Polymermischung und liegt vorzugsweise in einem Bereich von etwa 40 bis etwa 250°C.

Durch Anwenden der vorstehenden Arbeitsweise ist es möglich, den Einsatz von linoleumfremden Material zu minimieren und gleichzeitig die charakteristischen Eigenschaften des Produkts beizubehalten. Insbesondere läßt sich dadurch eine ausgezeichnete Abriebfestigkeit des linoleumfremden Materials im Gesamtaufbau erzielen.

Durch die Auswahl und Gestaltung des Auftragswerkzeugs, wie eine Auftragswalze und deren Oberflächenbeschaffenheit oder die Art des Sprühauftrags, sowie die Behandlung des Vorfells, beispielsweise mit vorbestimmten Vertiefungen, lassen sich unterschiedliche Oberflächendessinierungen bzw. -erscheinungen des fertigen Linoleumflächengebildes erzeugen.

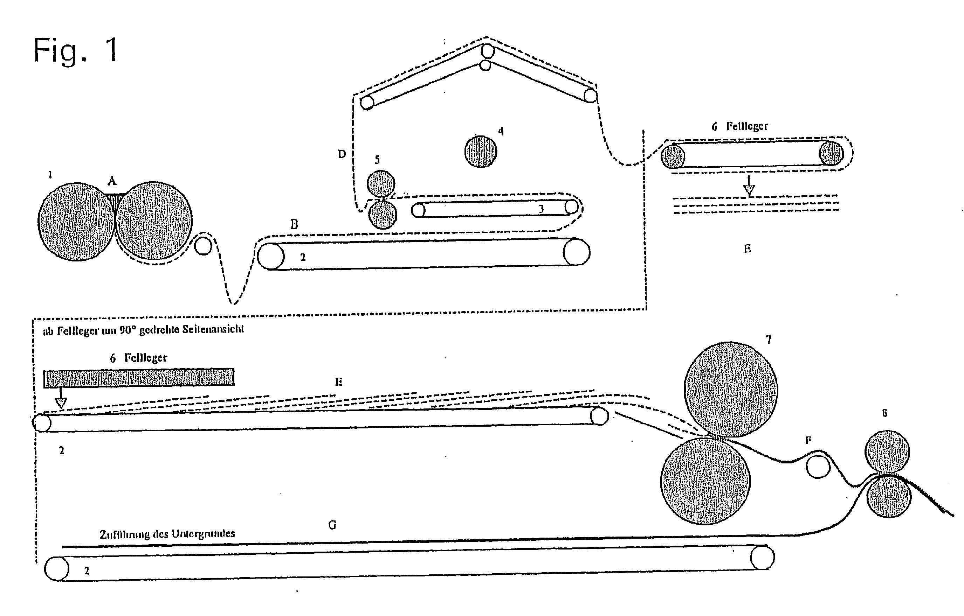

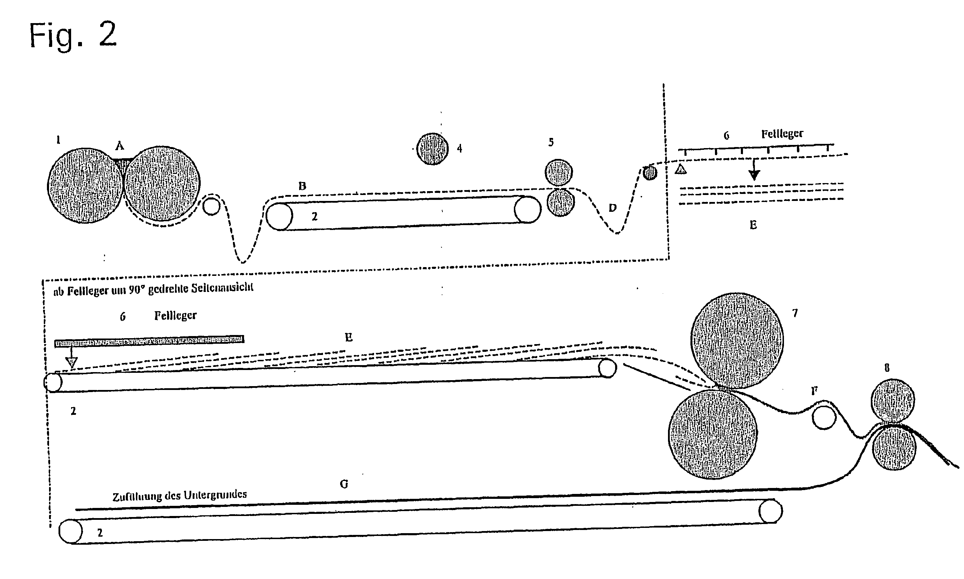

Bevorzugte Ausführungsformen der erfindungsgemäßen Verfahren werden in den Figuren 1 und 2 beschrieben, die verdeutlichen, daß ein Linoleumvorfell, das üblicherweise eine Breite von etwa 0,5 m bis etwa 2,5 m und eine Dicke in einem Bereich von etwa 0,5 mm bis etwa 5 mm aufweist in Stücke geeigneter Länge, vorzugsweise eine Länge, die der beabsichtigten Breite des herzustellenden Linoleumflächengebildes, d.h. etwa 1 m bis 2,5 m entspricht, geschnitten und anschließend durch einen Fellleger zu einem schuppenförmigen Fellpaket gelegt werden kann. Dabei werden die Stücke vorzugweise derart gelegt, daß die ursprüngliche Längsrichtung des Linoleumvorfells quer zur Transportrichtung des schuppenförmigen Fellpakets, vorzugsweise 90° zur Transportrichtung, zu liegen kommt. Anschließend kann das Fellpaket beispielsweise durch einen Kalander auf eine gewünschte Dicke, vorzugsweise 1 mm bis 5 mm, zu dem gemusterten Linoleumflächengebilde ausgewalzt werden.

Figur 1 ist eine schematische Ansicht einer Vorrichtung zur Durchführung einer bevorzugten Ausführungsform des erfindungsgemäßen Verfahrens. Aus der vorgefertigten ein- oder mehrfarbigen Linoleummischmasse A wird im Fellwalzwerk 1 ein Fell ausgewalzt. Je nach Mischmasse A resultiert ein unifarbenes bzw. jaspiertes Linoleumfell B. Über ein erstes Förderband 2 wird das Linoleumfell B auf ein zweites Förderband 3 transportiert, wo mittels einer Auftragsvorrichtung 4 das linoleumfremde Material auf das Linoleumfell B aufgebracht wird. Das derart ausgestattete Linoleumfell D wird nun zum Fellleger 6 geführt, in ca. 2 m lange Stücke geteilt und zu einem schuppenförmigen Fellpaket E gelegt. Das Fellpaket E wird dabei derart auf ein weiteres Förderband gelegt, daß die beschichtete Seite im Fellpaket E nach oben zeigt. Dieses Förderband führt das Fellpaket E dem Fellkalander 7 zu, wobei die beschichtete Linoleumfellseite der kalten Musterungswalze zugewandt ist. Im Fellkalander 7 wird das Fellpaket E auf die gewünschte Stärke zum Strukturfell F (Nutz- bzw. Musterschicht) ausgewalzt und in einem Doublierwalzwerk 8 mit dem Untergrund G verbunden.

Figur 2 ist eine schematische Ansicht einer Vorrichtung zur Durchführung einer weiteren bevorzugten Ausführungsform des erfindungsgemäßen Verfahrens. Während gemäß der in Figur 1 gezeigten Ausführungsform die Rückseite des Linoleumfells B mit dem linoleumfremden Material ausgestattet wird, wird in dieser Anlage das linoleumfremde Material direkt auf die Vorderseite des Linoleumfells B aufgebracht.

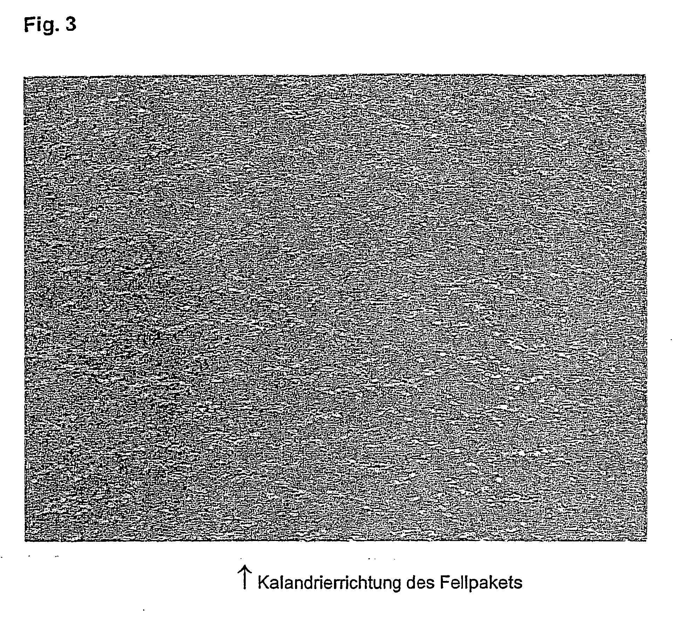

In den nachfolgenden Figuren 3 bis 6 sind nach dem erfindungsgemäßen Verfahren herstellbare gemusterte Linoleumflächengebilde dargestellt.

Nach dem erfindungsgemäßen Verfahren besteht die Möglichkeit, das linoleumfremde Material auf die gesamte Oberfläche des Linoleumvorfells aufzubringen oder auch nur auf eine Teilfläche davon. In gleicher Weise können die mit dem linoleumfremden Material zu füllenden Vertiefungen, beispielsweise Rillen, über die in Kalandrierungsrichtung gesehen gesamte Breite des Linoleumvorfells angeordnet werden oder auch nur über einen Teil von dessen Breite.

Wenn beispielsweise das Linoleumvorfell nur halbseitig flächig mit dem linoleumfremden Material beschichtet wird, das halbseitig beschichtete Linoleumvorfell in Stücke geschnitten wird, deren Länge etwa der Breite des Linoleumvorfells entspricht und diese Stücke um 90° gedreht von einem Fellleger zu einem Fellpaket geschichtet werden, dieses Fellpaket dem Kalander so zugeführt wird, daß die jeweils beschichteten Hälften der Linoleumvorfellstücke zum Kalander zeigen, entsteht ein Linoleumfell, bei dem sich das linoleumfremde Material im wesentlichen nur an der Oberfläche bzw. in einer oberflächennahen Schicht als Muster wiederfindet. In tieferen Schichten des Linoleumvorfells findet sich dementsprechend praktisch kein linoleumfremdes Material. Dadurch kann beispielsweise die Menge von teurem linoleumfremden Material reduziert und damit die Kosten gesenkt werden.

Generell hängt die Frage, ob das linoleumfremde Material im fertigen Linoleumflächengebilde bzw. dessen Deckschicht über den gesamten Querschnitt oder nur einen Teil davon vorhanden ist, davon ab, ob das Linoleumvorfell über seine gesamte Oberflächenbreite mit dem linoleumfremden Material beschichtet wurde oder nicht. Sofern das Linoleumvorfell über die gesamte Breite seiner Oberfläche mit dem linoleumfremden Material beschichtet wurde, das Linoleumvorfell anschließend in Abschnitte unterteilt wurde und dann diese Abschnitte in Form eines Fellpakets aus den übereinandergelegten Abschnitten kalandriert wurde, findet sich das linoleumfremde Material über den gesamten Querschnitt der Deckschicht bzw. des Linoleumflächengebildes, und zwar im wesentlichen in einer schräg verlaufenden Schichtenstruktur. Wenn das Linoleumvorfell hingegen in Kalandrierrichtung über z.B. nur die Hälfte seiner Breite mit dem linoleumfremden Material beschichtet wurde und das Linoleumvorfell in derselben, wie vorstehend beschriebenen Weise weiterverarbeitet wurde, findet sich über den Querschnitt der Deckschicht bzw. des Linoleumflächengebildes zwar ebenfalls die schräg verlaufende Schichtenstruktur, aber nur bis zu etwa der Hälfte der Dicke dieser Deckschicht bzw. des Linoleumflächengebildes.

Wird andererseits das linoleumfremde Material bereits der Linoleummischmasse anteilig zugegeben und diese Linoleummischmasse anschließend zu einem Linoleumvorfell kalandriert bzw. ausgewalzt, findet sich das linoleumfremde Material mehr oder weniger homogen über den gesamten Querschnitt der Deckschicht des fertigen Linoleumflächengebildes verteilt, je nachdem, wie homogen die Linoleummischmasse und das linoleumfremde Material vor dem Kalandrieren miteinander vermischt worden sind.

Das linoleumfremde musterbildende Material wird durch das Kalandrieren flächenbündig in die Oberfläche des Linoleumbelags eingearbeitet und gewährleistet damit eine dauerhafte und abrieb- bzw. abnutzungsbeständige Dessinierung. Verstärkt wird dieser Effekt durch die Verfahrensweise, daß in das Linoleumfell Vertiefungen, wie Rillen oder begrenzte Prägeflächen, eingebracht werden, die dann mit dem mustergebenden Material gefüllt werden. Zudem können die erhabenen Stellen des Linoleumfells flächig, ganz oder teilweise mit dem mustergebenden Material beschichtet werden.

Üblicherweise wird das Fellpaket nach dem Auswalzen auf einen geeigneten Träger abgelegt, wobei ein- und mehrschichtige Aufbauten möglich sind. In der Regel besteht der Träger aus einem Gewebe aus beispielsweise Jute, Glasfasern, Metall oder synthetischen Fasern. Wie in DE 199 10 389 A1 beschrieben, kann, wenn gewünscht, der Träger derart ausgewählt werden, daß er nach der üblichen Reifung des Linoleumflächengebildes von dem fertig gereiften Linoleumflächengebilde im wesentlichen rückstandsfrei entfernt werden kann.

Das Auswalzen des Fellpakets erfolgt durch übliche auf dem Fachgebiet bekannte Verfahren, vorzugsweise durch Kalandrieren. Bei Anwendung des Kalandrierens werden die Kalanderwalzen auf einer bei der für die Herstellung von Linoleumflächengebilden üblicherweise verwendeten Temperatur gehalten. Vorzugsweise ist die Temperatur der Kalanderwalze, die der Nutzschicht des Linoleumfilächengebildes zugewandt ist (obere Kalanderwalze), niedriger als die der Kalanderwalze, die der Unterseite bzw. Trägerseite des Linoleumflächengebildes zugewandt ist (untere Kalanderwalze).

Nach dem Auswalzen des schuppenförmigen Fellpakets wird das gebildete gemusterte Linoleumflächengebilde in üblicher Art und Weise einem Reifungsschritt unterzogen. Anschließend kann, wenn gewünscht, eine Oberflächenbeschichtung, beispielsweise eine auf Acrylat oder Polyurethan basierende Dispersion, auf das gereifte Linoleumflächengebilde aufgebracht werden.

Überraschenderweise wurde festgestellt, daß bei Anwendung des erfindungsgemäßen Verfahrens, beispielsweise bei Verwendung eines vollständig mit dem linoleumfremden Material oberflächenbeschichteten Linoleumvorfells, ein neuartiges Muster an der Oberfläche des Linoleumflächengebildes erzeugt werden kann.

In diesem Zusammenhang war insbesondere überraschend, daß eine unterbrochene marmorierte Oberflächenstruktur erhalten wurde, selbst wenn das Linoleumvorfell vollflächig mit dem linoleumfremden Material beschichtet wurde. Gleiches gilt für den Fall, bei dem eine flächige Schicht nur auf den Bereich (etwa eine Hälfte des Linoleumvorfells) des Linoleumvorfells aufgebracht wird, der in Kalandrierungsrichtung liegt, und den Fall, bei dem beispielsweise in Kalandrierrichtung des Linoleumvorfells lineare oder mäandernde Rillen in dem Linoleumvorfell vorgesehen sind, die beim anschließenden, Kalandrieren des Fellpakets aus in Stücke geschnittenem und um 90° gedrehtem Lineleumvorfell im wesentlichen quer zur Kalandrierungsrichtung verlaufen.

Ferner stellt die vorliegende Erfindung ein nach den erfindungsgemäßen Verfahren erhältliches gemustertes Linoleumflächengebilde bereit.

Das nach den erfindungsgemäßen Verfahren erhältliche Linoleumflächengebilde weist das auf das Linoleumvorfell aufgetragene mustergebende linoleumfremde Material in einer nicht-homogenen, unregelmäßig verteilten Art und Weise auf, die für das erfindungsgemäße Verfahren charakteristisch ist. Ohne an die nachfolgenden Erklärungen gebunden zu sein, wird angenommen, daß das linoleumfremde Material, nachdem das Fellpaket durch einen Kalander(spalt) geführt wurde, im wesentlichen über den gesamten Querschnitt des fertigen Linoleumflächengebildes in unterbrochenen, beispielsweise schichtartigen Strukturen vorhanden ist. An der Oberfläche des nach den erfindungsgemäßen Verfahren erhältlichen gemusterten Linoleumflächengebildes ist eine unterbrochene marmorierte Struktur erkennbar, welche in Abhängigkeit von der Art des auf das Linoleumvorfell aufgetragenen linoleumfremden Materials einer gegebenenfalls bereits durch übliche Maßnahmen erhältlichen Musterstruktur überlagert ist.

Zur Verdeutlichung der gemäß den erfindungsgemäßen Verfahren überraschenderweise herstellbaren Oberflächenstrukturen wird auf die nachfolgenden Figuren verwiesen. Die in den Figuren 3 bis 6 gezeigten gemusterten Linoleumflächengebilde wurden durch Kalandrieren eines Fellpakets aus schuppenförmig übereinandergelegten unterschiedlich beschichteten Linoleumvorfellen gebildet.

Figur 3 ist die Abbildung eines wie vorstehend beschrieben hergestellten gemusterten Linoleumflächengebildes, wobei ein unifarbenes Linoleumvorfell vollflächig mit einer Effektpaste aus Polyester-Glimmer mit einem Träger auf Basis eines wasserbasierenden Cellulosederivats beschichtet wurde.

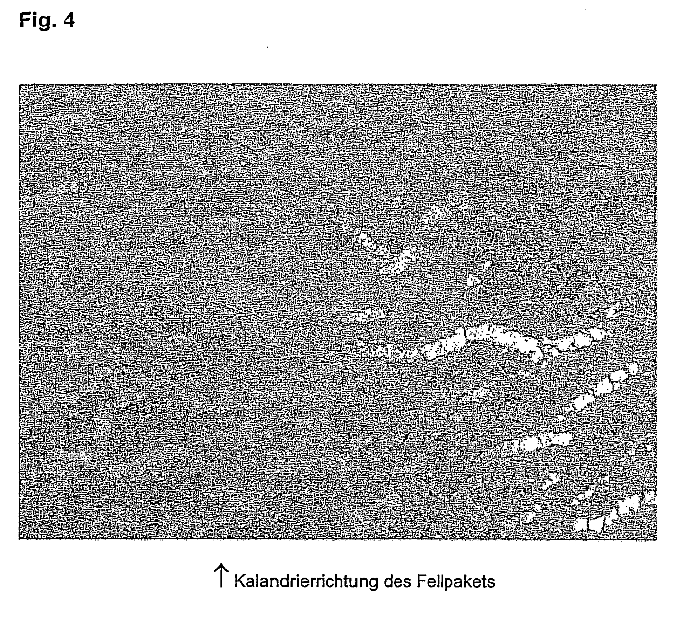

Figur 4 ist die Abbildung eines wie vorstehend beschrieben hergestellten gemusterten Linoleumflächengebildes, wobei ein mehrfarbiges Linoleumvorfell mit Rillen verwendet wurde, die quer zur Kalandrierungsrichtung angeordnet sind und mit einer Aluminiumpaste gefüllt wurden.

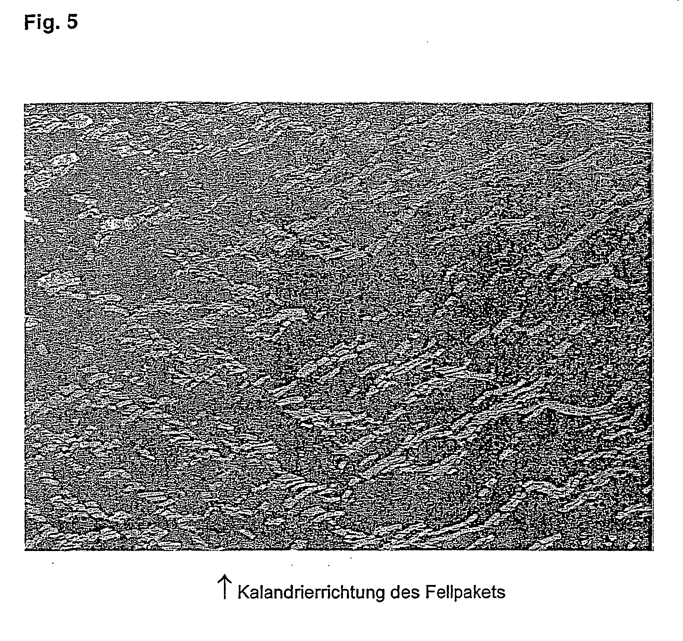

Figur 5 ist die Abbildung eines wie vorstehend beschrieben hergestellten gemusterten Linoleumflächengebildes, wobei ein Linoleumvorfell mit Rillen, die quer zur Kalandrierungsrichtung angeordnet sind und die zueinander einen Abstand von etwa 0,5 mm, eine Rillentiefe von etwa 0,5 mm und eine Breite von etwa 0,5 mm aufwiesen, verwendet wurde. Dieses Linoleumvorfell wurde vollflächig mit einer Aluminiumpaste beschichtet und anschließend kalandriert.

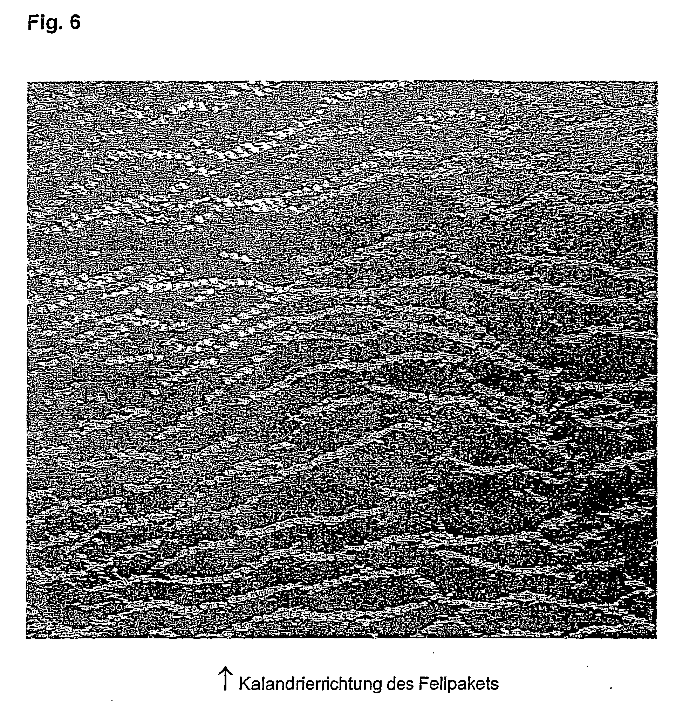

Figur 6 ist die Abbildung eines wie in Figur 4 beschrieben hergestellten gemusterten Linoleumflächengebildes, wobei ein einfarbiges Linoleumvorfell mit punktförmigen Vertiefungen versehen wurde, wobei die punktförmigen Vertiefungen einen Durchmesser von etwa 0,5 mm, einen Abstand voneinander von etwa 0,5 mm und eine Tiefe von etwa 0,5 mm aufweisen. Das Linoleumvorfell wurde vollflächig mit einer Aluminiumpaste beschichtet, wobei die punktförmigen Vertiefungen ausgefüllt wurden. Die als Fellpaket übereinandergelegten beschichteten Linoleumvorfellstücke wurden anschließend kalandriert.

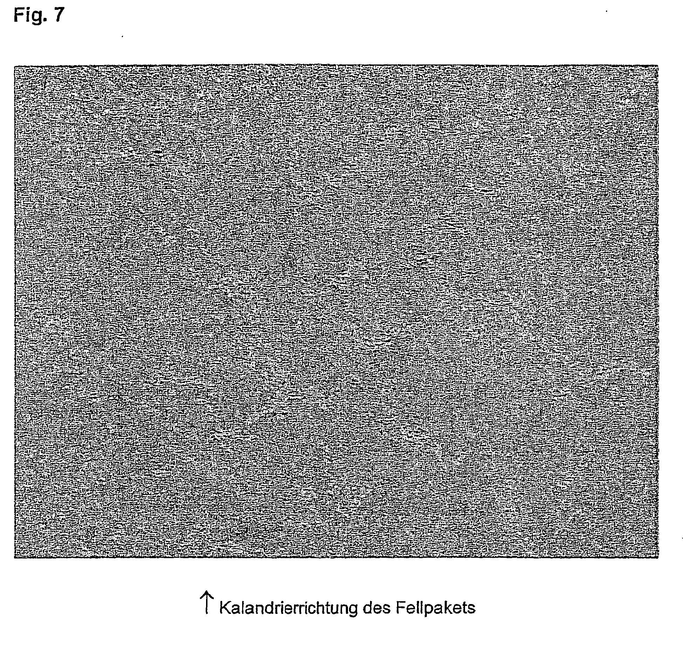

Figur 7 ist die Abbildung eines wie vorstehend beschrieben hergestellten gemusterten Linoleumflächengebildes, wobei ein mehrfarbiges Linoleumvortell aus gekratzter Mischmasse hergestellt wurde. Das Linoleumvorfell wurde in seiner Kalandrierrichtung in einer Breite von ca. 30 cm mit unterbrochenen, unregelmäßigen Rillen versehen und das Linoleumvorfell wurde unter vollständigem Verfüllen der Rillen vollflächig mit einer Aluminiumpaste auf Dispersionsbasis beschichtet.

Anschließend wurde das Linoleumvorfell in Stücke geschnitten, diese um 90° gedreht, zu einem Fellpaket schuppenartig übereinandergelegt und erneut kalandriert.

Wie aus den Figuren klar hervorgeht, bildet sich sogar nach Kalandrieren eines Fellpakets, das vollflächig beschichtete Linoleumvorfelle umfaßt, keine im wesentlichen ganzflächig mit dem linoleumfremden Material bedeckte Oberflächenschicht, sondern überraschenderweise eine unterbrochene, neuartige Musterstruktur. Die Ausbildung dieser unerwarteten Musterung an der Oberfläche des fertigen Linoleumflächengebildes scheint auf statistische, nicht vorhersehbare Durchmischungsprozesse im Kalanderspalt während des Kalandrierens zurückzuführen zu sein.

Figur 8 ist eine schematische Ansicht einer Vorrichtung zur Durchführung einer weiteren bevorzugten Ausführungsform des erfindungsgemäßen Verfahrens. Im Unterschied zu der in Figur 2 gezeigten Ausführungsform wird ein das linoleumfremde Material enthaltendes Heißschmelzmaterial durch einen Hotmeltcoater 9, der sich unterhalb der kalten Walze des Fellkalanders 1 befindet, auf die Unterseite des Linoleumvorfells aufgebracht. Die weiteren Arbeitsschritte erfolgen wie in Figur 2 gezeigt.

Darüber hinaus stellt die vorliegende Erfindung die Verwendung eines Linoleumflächengebildes, das durch die erfindungsgemäßen Verfahren erhältlich ist, als Bodenbelag, Fliese, Wandabdeckung oder Dekorbelag bereit.

In den vorstehend beschriebenen erfindungsgemäßen Verfahren können auch andere üblicherweise zur Herstellung von Flächengebilden (insbesondere Bodenbelägen) verwendete Kunststoffmaterialien anstelle von Linoleum verwendet werden. Geeignete Kunststoffmaterialien sind einem Fachmann bekannt. Als Beispiele seien Kunststoffe auf PVC-Basis, Polyolefin-Basis, EVA-Basis, Polyacrylat-Basis oder Kautschuk-Basis genannt. Bei Anwendung der vorstehend genannten Kunststoffe lassen sich gemusterte Flächengebilde auf beispielsweise PVC-Basis, Polyolefin-Basis, EVA-Basis, Polyacrylat-Basis oder Kautschuk-Basis herstellen, die eine neuartige Dessinierung an der Oberfläche tragen.

Die Erfindung wird durch die nachfolgenden, nicht beschränkenden Beispiele weiter erläutert.

### Beispiel 1

### Herstellung eines Prototyps eines gemusterten Linoleumflächengebildes

Zunächst wird ein einfarbiges Linoleumvorfell aus gekratzter Mischmasse auf einem Technikumswalzwerk in einer Dicke von etwa 2 mm hergestellt.

Das Linoleumvorfell wird ganzflächig mit einer Polyester-Glimmer enthaltenden Effektpaste mit einem wasserbasierenden Cellulose-Derivat als Träger mit einer Moltopren-Schaumgummiwalze beschichtet.

Nach kurzer Trocknung wird das Linoleumvorfell in acht gleich große Stücke geschnitten, diese übereinandergestapelt, das erhaltene Fellpaket verpresst und erwärmt. Die Fellpaketdicke betrug etwa 16 mm. Dieses Fellpaket wird mittels eines Laborwalzwerks kalandriert, wobei die Laufrichtung des Fellpakets quer zur Laufrichtung des Linoleumvorfells war. Die Dicke des erhaltenen Linoleumflächengebildes; welches in Figur 3 abgebildet ist, betrug etwa 2 mm.

### Beispiel 2

### Herstellung eines Prototyps eines gemusterten Linoleumflächengebildes

In derselben, wie in Beispiel 1 beschriebenen Weise wurde ein Linoleumflächengebilde hergestellt, jedoch mit folgenden Unterschieden.

Ein mehrfarbiges Linoleumvortell wurde mittels eines Kratzwerkzeugs über seine gesamte Breite mit in Kalandrierrichtung weisenden, durchgehenden Rillen versehen. Der Rillenabstand wurde auf etwa 5 mm, die Rillentiefe auf etwa 0,5 mm und die Rillenbreite auf etwa 1 mm eingestellt.

Die Rillen wurden mit einem Gummirakel mit einer Aluminiumpaste auf Dispersionsbasis gefüllt.

Das Linoleumvorfell wurde in derselben Weise wie in Beispiel 1 zu einem Linoleumflächengebilde weiterverarbeitet. Das erhaltene Linoleumflächengebilde ist in Figur 4 dargestellt. Es ist deutlich zu erkennen, daß die sich aus der Aluminiumpaste ergebende Musterstruktur (die wellenförmigen, hellen Bereiche) der durch die mehrfarbige Linoleummischmasse sich ergebenden, marmorartigen Struktur (die feinen, dunklen Zonen) überlagert ist.

### Beispiel 3

### Herstellung eines Prototyps eines gemusterten Linoleumflächengebildes

In derselben, wie in Bespiel 1 beschriebenen Weise wurde ein einfarbiges Linoleumvorfell hergestellt. Dieses Linoleumvorfell wurde mittels eines Kratzwerkzeugs über seine gesamte Breite mit in Kalandrierrichtung des Linoleumvorfells weisenden, unterbrochenen und unregelmäßig angeordneten Rillen versehen. Der Rillenabstand wurde auf etwa 0,5 mm, die Rillentiefe auf etwa 0,5 mm und die Rillenbreite auf etwa 0,5 mm eingestellt.

Die Rillen wurden mit einem Gummirakel vollständig mit einer Aluminiumpaste auf Dispersionsbasis gefüllt und zusätzlich wurden die erhabenen Stellen des Linoleumvorfells vollflächig mit derselben Aluminiumpaste beschichtet.

Das Linoleumvorfell wurde anschließend in derselben Weise, wie in Beispiel 1 zu einem Linoleumflächengebilde, welches in Figur 5 abgebildet ist, weiterverarbeitet.

### Beispiel 4

### Herstellung eines Prototyps eines gemusterten Linoleumflächengebildes

In derselben, wie in Beispiel 1 beschriebenen Weise wurde ein einfarbiges Linoleumvorfell hergestellt. Dieses Linoleumvorfell wurde mittels eine Prägewalze über seine gesamte Breite mit punktförmigen Vertiefungen versehen. Der Punktdurchmesser wurde auf etwa 0,5 mm, der Punktabstand auf etwa 0,5 mm und die Punkttiefe auf etwa 0,5 mm eingestellt. Die punktförmigen Vertiefungen wurden mit einem Gummirakel vollständig mit einer Aluminiumpaste auf Dispersionsbasis gefüllt und zusätzlich wurde das Linoleumvorfell ganzflächig auf den erhabenen Bereichen mit derselben Aluminiumpaste beschichtet. Das Linoleumvorfell wurde anschließend in derselben Weise wie in Beispiel 1 zu einem Linoleumflächengebilde, welches in Figur 6 abgebildet ist, weiterverarbeitet.

### Beispiel 5

### Herstellung eines Bodenbelags aus einem gemusterten Linoleumflächengebilde

Zunächst wird ein mehrfarbiges Linoleumvorfell aus mehrfarbiger gekratzter Linoleummischmasse durch Kalandrieren in einer Breite von etwa 160 cm und einer Dicke von etwa 1,8 mm hergestellt.

Das Linoleumvorfell wird in seiner Kalandrierrichtung in einer Breite von etwa 30 cm von seinem Rand mit einem Kratzwerkzeug auf seiner Oberseite mit unterbrochenen, unregelmäßigen Rillen versehen. Der Rillenabstand wird auf etwa 0,5 mm, die Rillentiefe auf etwa 0,5 mm und die Rillenbreite auf etwa 0,5 mm eingestellt. Das erhaltene Linoleumvorfell wird mit einem Gummirakel vollflächig mit einer Aluminiumpulver enthaltenden Paste auf Dispersionsbasis beschichtet, wobei die Rillen vollständig aufgefüllt wurden.

Nach kurzzeitiger Trocknung wurde das Linoleumvorfell in Abschnitte von etwa 2 m Länge geschnitten, die Abschnitte um 90° gedreht und zu einem schuppenförmigen Fellpaket übereinandergelegt. Dabei ragt der mit Rillen versehene Rand der Linoleumvorfellstücke beim anschließenden Kalandrieren in Richtung des Kalanders, wobei die gefüllten Rillen und die beschichtete Oberfläche der Linoleumvorfellstücke nach oben zeigen. Damit liegen die Rillen beim anschließenden Kalandrieren quer zur Kalandrierrichtung. Das Fellpaket aus schuppenförmigen übereinandergestapelten Linoleumvorfellstücken wird erwärmt und verpresst, wobei sich ein Fellpaket mit einer Dicke von etwa 30 mm, was etwa der 16-fachen Dicke des Linoleumvorfells entspricht, ergibt. Dieses verpresste Fellpaket wird anschließend zu einem Linoleumflächengebilde mit einer Dicke von etwa 1,5 mm kalandriert.

Dieses Linoleumflächengebilde wird als Linoleumdeckfell, d.h. die Deckschicht eines Linoleumbodenbelags verwendet.

Separat wurde ein Bodenbelags-Untergrund auf einem getrennten Walzwerk hergestellt, indem eine Linoleummischmasse auf ein Jutegewebe aufgewalzt (kalandriert) wurde. Der Untergrund wies eine Dicke von ca. 1 mm auf.

In einem weiteren Arbeitsschritt wurden das Linoleumdeckfell und der Untergrund mit einem sog. Bandkalander kraftschlüssig miteinander verbunden. In Figur 7 ist die Musterstruktur auf der Oberfläche des erhaltenen Linoleumflächengebildes, in diesem Fall ein Linoleumbodenbelag, abgebildet.

## Patentansprüche

1. Verfahren zur Herstellung eines gemusterten Linoleumflächengebildes, umfassend die Schritte:
(a) Aufbringen einer flächigen Schicht aus einem linoleumfremden Material auf mindestens einen Teil der Oberfläche eines Linoleumvorfells (B) und/oder Einbringen eines linoleumfremden Materials in vorbestimmte Vertiefungen in dem Linoleumvorfell
(b) Schneiden des erhaltenen Linoleumvorfells (D) in Stücke vorbestimmter Länge,
(c) Übereinanderlegen der geschnittenen Linoleumvorfellstücke zu einem schuppenförmigen Fellpaket (E) und
(d) Auswalzen (7) des schuppenförmigen Fellpakets zu einem gemusterten Linoleumflächengebilde (F),

2. Verfahren zur Herstellung eines gemusterten Linoleumflächengebildes, umfassend die Schritte:
(a') Aufbringen eines linoleumfremden Materials in Form einer Lösung, einer Paste, einer Suspension oder einer Dispersion auf eine gekratzte Linoleummischmasse und Auswalzen der mit dem linoleumfremden Material versehenen gekratzten Linoleummischmasse zu einem Linoleumvorfell oder einem fertigen Linoleumflächengebilde.

3. Verfahren nach Anspruch 2, wobei das in Schritt (a') erhaltene Linoleumvorfell weiterverarbeitet wird durch:
(b) Schneiden des erhaltenen Linoleumvorfells in Stücke vorbestimmter Länge,
(c) Übereinanderlegen der geschnittenen Linoleumvortellstücke zu einem schuppenförmigen Fellpaket und
(d) Auswalzen des schuppenförmigen Fellpakets zu einem gemusterten Linoleumflächengebilde.

4. Verfahren nach Anspruch 2 oder 3, wobei im Anschluß an Schritt (a') eine flächige Schicht aus einem linoleumfremden Material auf mindestens einen Teil der Oberfläche dieses Linoleumvorfells aufgebracht und/oder ein linoleumfremdes Materials in vorbestimmte Vertiefungen in diesem Linoleumvorfell eingebracht wird/werden.

5. Verfahren nach einem der vorhergehenden Ansprüche, wobei das linoleumfremde Material ein metallisches Material und/oder ein Pigment ist, das sich von dem/den gegebenenfalls zur Färbung der Linoleummischmasse verwendeten Pigment(en) unterscheidet.

6. Verfahren nach einem der vorhergehenden Ansprüche, wobei das linoleumfremde Material ein Metallpulver, eine Metallpaste, ein Effektpigment, ein Glanzpigment oder ein Perlglanzeffektpigment ist.

7. Verfahren nach einem der vorhergehenden Ansprüche, wobei das linoleumfremde Material ein Aluminiumpulver, eine Aluminiumpaste oder ein Effektpigment auf Basis von Glimmer oder Glimmermineralien oder einem Polyester-Glimmer ist.

8. Verfahren nach einem der Ansprüche 1 und 4 bis 7, wobei das linoleumfremde Material als flächige Schicht auf die gesamte Breite oder nur einen Teil des Linoleumvorfells aufgebracht und/oder in vorbestimmte rillenförmige Vertiefungen, welche über die gesamte Breite oder nur einen Teil der Breite des Linoleumvorfells vorhanden sind, eingebracht wird.

9. Verfahren nach einem der Ansprüche 1 und 4 bis 8, wobei die flächige Schicht in einer Dicke von 5 µm bis 1000 µm auf das Linoleumvorfell aufgebracht wird.

10. Verfahren nach einem der Ansprüche 1 und 4 bis 9, wobei die Vertiefungen in dem Linoleumvorfell eine Tiefe in einem Bereich von 5% bis 60%, bezogen auf die Dicke des Linoleumvorfells, aufweisen.

11. Verfahren zur Herstellung eines gemusterten Linoleumflächengebildes, umfassend die Schritte:
- Herstellen eines ein- oder mehrfarbigen Linoleumvorfells (B) aus Linoleummischmasse,
- Beschichten des ein- oder mehrfarbigen Linoleumvorfells (B) auf mindestens einem Teil seiner Oberfläche mit einem linoleumfremden Material,
- Verarbeiten des beschichteten Linoleumvorfells zu Granulat oder Chips, entweder direkt oder nachdem es in Kalandrierrichtung entweder in vorzugsweise gleich große Hälften geschnitten und anschließend die Abschnitte übereinandergelegt wurden oder das Linoleumvorfell ein- oder mehrfach gefaltet wurde,
- Herstellen eines Linoleumfells aus den erhaltenen Granulatteilchen oder Chips durch Auswalzen derselben und gegebenenfalls
- Weiterverarbeiten des erhaltenen Linoleumfells zu einem endgültigen Linoleumflächengebilde.

12. Verfahren nach Anspruch 11, wobei das linoleumfremde Material ein metallisches Material oder ein Pigment ist, das sich von dem/den gegebenenfalls zur Färbung der Linoleummischmasse verwendeten Pigment(en) unterscheidet.

13. Verfahren nach Anspruch 11 oder 12, wobei das linoleumfremde Material ein Metallpulver, eine Metallpaste, ein Effektpigment, ein Glanzpigment oder ein Perlglanzeffektpigment ist.

14. Verfahren nach einem der Ansprüche 11 bis 13, wobei das linoleumfremde Material ein Aluminiumpulver, eine Aluminiumpaste oder ein Effektpigment auf Basis von Glimmer oder Glimmermineralien oder einem Polyester-Glimmer ist.

15. Gemustertes Linoleumflächengebilde, das nach einem Verfahren nach einem der Ansprüche 1 bis 14 erhältlich ist.

16. Verwendung eines gemusterten Linoleumflächengebildes nach Anspruch 15 als Bodenbelag, Fliese, Wandabdeckung oder Dekorbelag.

## Claims

1. Method for producing a patterned linoleum sheeting, comprising the steps:
(a) Applying a flat laver of a non-linoleum material to at least portion of the surface of a green linoleum (B) and/or introducing a non-linoleum material into predetermined recesses in the green linoleum,
(b) Cutting the resulting green linoleum (D) into pieces of a predetermined length,
(c) Layering the cut green linoleum pieces to form a tiled stack of sheets (E) and
(d) Calendering (7) the tiled stack of sheets to form patterned linoleum sheeting (F).

2. Method for producing a patterned linoleum sheeting, comprising the steps:
(a') Applying a non-linoleum material in the form of a solution, paste, suspension or dispersion to a scraped linoleum mixture and calendering the scraped linoleum mixture furnished with the non-linoleum material to form a green linoleum or a finished linoleum sheeting.

3. Method as claimed in Claim 2, wherein the green linoleum obtained in step (a') is processed further by:
(b) Cutting the resulting green linoleum into pieces of a predetermined length,
(c) Layering the cut green linoleum pieces to form a tiled stack of sheets and
(d) Calendaring the tiled stack of sheets to form a patterned linoleum sheeting.

4. Method as claimed in Claim 2 or 3, wherein after step (a'), a flat layer of a non-linoleum material is applied to at least part of the surface of this green linoleum and/or a non-linoleum material is introduced into predetermined recesses in this green linoleum.

5. Method as claimed in any one of the preceding claims, wherein the non-linoleum material is a metallic material and/or a pigment that differs from the pigment(s) optionally used for coloring the linoleum mixture.

6. Method as claimed in any one of the preceding claims, wherein the non-linoleum material is a metal powder, a metal paste, an effect pigment, a luster pigment or a pearlescent effect pigment.

7. Method as claimed in any one of the preceding claims, wherein the non-linoleum material is an aluminum powder, an aluminum paste or an effect pigment based on mica or mica minerals or a polyester-mica.

8. Method as claimed in any one of Claims 1 and 4 through 7, wherein the non-linoleum material is applied as a flat layer to the entire width or only a portion of the green linoleum and/or is introduced into predetermined groove-like recesses which are present over the entire width or only a portion of the width of the green linoleum.

9. Method as claimed in any one of Claims 1 and 4 through 8, wherein the flat layer is applied to the green linoleum in a thickness of 5 µm to 1000 µm.

10. Method as claimed in any one of Claims 1 and 4 through 9, wherein the recesses in the green linoleum have a depth in the range of 5% to 60%, based on the thickness of the green linoleum.

11. Method for producing a patterned linoleum sheeting, comprising the steps:
- Producing a single-color or multicolor green linoleum (B) from a linoleum mixture,
- Coating the singie-coior or multicolor green linoleum (B) with a non-linoleum material over at least a portion of its surface,
- Processing the coated green linoleum to form granules or chips either immediately or after being cut into preferably approximately equally large halves in the calendering direction with the sections then being layered one above the other or folding the green linoleum once or several times,
- Producing a linoleum sheet from the resulting granular particles or chips by calendering same and optionally
- Further processing the resulting linoleum sheet to form a final linoleum sheeting.

12. Method as claimed in Claim 11, wherein the non-linoleum material is a metallic material or a pigment that differs from the pigment(s) optionally used for coloring the linoleum mixture.

13. Method as claimed in Claim 11 or 12, wherein the non-linoleum material is a metal powder, a metal paste, an effect pigment, a luster pigment or a pearlescent effect pigment.

14. Method as claimed in any one of Claims 11 through 13 wherein the non-linoleum material is an aluminum powder, an aluminum paste, an effect pigment based on mica or mica materials or a polyester-mica.

15. Patterned linoleum sheeting obtainable by a method as claimed in any one of Claims 1 through 14.

16. Use of a patterned linoleum sheeting as claimed in Claim 15 as a floor covering, as tiles, a wall covering or decorative covering.

## Revendications

1. Procédé de fabrication d'une feuille de linoléum à motifs comportant les étapes consistant à :
(a) appliquer une fine couche en un matériau autre que du linoléum sur au moins une partie de la surface d'une plaque de linoléum (B) et/ou introduire un matériau autre que du linoléum dans des sillons prédéterminés dans la plaque de linoléum
(b) découper la plaque de linoléum (D) ainsi obtenue en pièces d'une longueur prédéterminée
(c) empiler les découpes de la plaque de linoléum de manière à former un paquet (E) de plaques disposées à la manière de tuiles et
(d) laminer (7) le paquet de plaques disposées à la manière de tuiles de manière à former une feuille de linoléum à motifs (F).

2. Procédé de fabrication d'une feuille de linoléum à motifs comportant les étapes consistant à :
(a') appliquer une matériau autre que du linoléum sous la forme d'une solution, d'une pâte, d'une suspension ou d'une dispersion sur une masse mixte grattée de linoléum et laminer la masse mixte de linoléum grattée dotée d'un matériau autre que du linoléum pour former une plaque de linoléum ou une feuille de linoléum finalisée.

3. Procédé selon la revendication 2, la plaque de linoléum ainsi obtenue au cours de l'étape (a') étant transformée ultérieurement en :
(b) découpant la plaque de linoléum obtenue en pièces d'une longueur prédéterminée
(c) empilant les pièces issues de la découpe des plaques de linoléum de manière à former un paquet de plaques disposées à la manière de tuiles et
(d) laminant le paquet de plaques disposées à la manière de tuiles de manière à former une feuille de linoléum à motifs

4. Procédé selon la revendication 2 ou 3, une fine couche d'un matériau autre que du linoléum étant, directement après l'étape (a'), appliquée sur au moins une partie de la surface de la plaque de linoléum et/ou un matériau autre que du linoléum étant introduit dans des sillons prédéterminés dans cette plaque de linoléum.

5. Procédé selon l'une quelconque des revendications précédentes, le matériau autre que du linoléum étant un matériau métallique et/ou un pigment qui se distingue du/des pigment(s) utilisé(s) éventuellement pour la coloration du mélange mixte de linoléum.

6. Procédé selon l'une quelconque des revendications précédentes, le matériau autre que du linoléum étant une poudre métallique, une pâte métallique, un pigment à effet, un pigment brillant ou un pigment à effet nacré brillant.

7. Procédé selon l'une quelconque des revendications précédentes, le matériau autre que du linoléum étant une poudre aluminium, une pâte aluminium ou un pigment à effet à base de mica ou de minéraux de mica ou d'un mica en polyester.

8. Procédé selon l'une quelconque des revendications 1 et 4 à 7, le matériau différent du linoléum étant appliqué en une fine couche sur la totalité de la largeur ou seulement sur une partie de la plaque de linoléum et/ou étant introduit dans des sillons en forme de rainures prédéterminés, lesquels sont présents sur la totalité de la largeur ou seulement sur une partie de la largeur de la plaque de linoléum.

9. Procédé selon l'une quelconque des revendications 1 et 4 à 8, la fine couche appliquée sur la plaque de linoléum présentant une épaisseur allant de 5 µm à 1000 µm.

10. Procédé selon l'une quelconque des revendications 1 et 4 à 9, les sillons présentant, dans la plaque de linoléum, une profondeur comprise dans la plage allant de 5 à 60 %, rapportée à l'épaisseur de la plaque de linoléum.

11. Procédé de fabrication d'une feuille de linoléum à motifs comportant les étapes consistant à :
- fabriquer une plaque de linoléum (B) mono- ou polychrome à partir d'une masse mixte de linoléum
- enduire la plaque de linoléum (B) mono- ou polychrome sur au moins une partie de la surface avec un matériau autre que du linoléum
- traitement de la plaque de linoléum enduite de manière à former des granulés ou des pastilles soit directement ou après qu'elle a été découpée dans le sens de calandrage en moitiés de préférence de même taille, les sections ayant été ensuite empilées, soit après qu'elle a été pliée en une ou plusieurs fois.
- fabriquer une plaque de linoléum à partir des petits granulés obtenus ou des pastilles par laminage de ces derniers et éventuellement
- transformer ultérieurement la plaque de linoléum ainsi obtenue de manière à former une feuille de linoléum finie.

12. Procédé selon la revendication 11, le matériau autre que du linoléum étant un matériau métallique ou un pigment, lequel se distingue du/des pigment(s) utilisé(s) éventuellement pour la coloration de la masse mixte de linoléum.

13. Procédé selon la revendication 11 ou 12, le matériau autre que du linoléum étant une poudre métallique, une pâte métallique, un pigment à effet, un pigment brillant ou un pigment à effet nacré brillant.

14. Procédé selon l'une quelconque des revendications 11 à 13, le matériau autre que du linoléum étant une poudre d'aluminium, une pâte d'aluminium ou un pigment à effet à base de mica ou de minéraux de mica ou à base de mica de polyester.

15. Feuille de linoléum à motifs, laquelle peut être obtenue selon un procédé selon l'une quelconque des revendications 1 à 14.

16. Utilisation d'une feuille de linoléum à motifs selon la revendication 15 comme revêtement de sol, dalle de pavage, revêtement mural ou revêtement décoratif.
